(19) Europäisches Patentamt / European Patent Office / Office européen des brevets

(11) **EP 3 085 018 B1**

(12) **EUROPEAN PATENT SPECIFICATION**

(45) Date of publication and mention
of the grant of the patent:
**21.11.2018 Bulletin 2018/47**

(21) Application number: **14827742.9**

(22) Date of filing: **18.12.2014**

(51) Int Cl.:
*H04L 12/24* *(2006.01)*          *H04L 12/26* *(2006.01)*

(86) International application number:
**PCT/EP2014/078582**

(87) International publication number:
**WO 2015/091869 (25.06.2015 Gazette 2015/25)**

(54) **DISTRIBUTED SATURATION DETECTION METHOD FOR WIRELESS NETWORK NODES**

VERTEILTES SÄTTIGUNGSNACHWEISVERFAHREN FÜR DRAHTLOSE NETZWERKKNOTEN

PROCÉDÉ DE DÉTECTION DE SATURATION DISTRIBUÉ POUR DES NOEUDS DE RÉSEAU SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2013 GB 201322679**

(43) Date of publication of application:
**26.10.2016 Bulletin 2016/43**

(73) Proprietor: **Dublin Institute of Technology
Dublin 6 (IE)**

(72) Inventors:
• **DAVIS, Mark
Co. Wicklow (IE)**
• **DING, Yi
Dublin 16 (IE)**

(74) Representative: **Lucey, Michael
PurdyLucey
Intellectual Property Limited
6-7 Harcourt Terrace
Dublin D02P210 (IE)**

(56) References cited:
**US-A1- 2006 030 318**

• **CHAKERES I D ET AL: "PAC: Perceptive
Admission Control for Mobile Wireless
Networks", QUALITY OF SERVICE IN
HETEROGENEOUS WIRED/WIRELESS
NETWORKS, 2004. QSH INE 2004. FIRST
INTERNATIONAL CONFERENCE ON DALLAS,
TX, USA 18-20 OCT. 2004, PISCATAWAY, NJ,
USA,IEEE, 18 October 2004 (2004-10-18), pages
18-26, XP010744451, DOI:
10.1109/QSHINE.2004.37 ISBN:
978-0-7695-2233-3**
• **DENG JIANHUA ET AL: "The performance of the
adaptive aggregation mechanism (AAM) in lossy
wireless networks", 2013 IEEE 20TH SYMPOSIUM
ON COMMUNICATIONS AND VEHICULAR
TECHNOLOGY IN THE BENELUX (SCVT), IEEE,
21 November 2013 (2013-11-21), pages 1-6,
XP032563336, DOI: 10.1109/SCVT.2013.6735993
[retrieved on 2014-02-07]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to a data processing method for reliably detecting node saturation in a wireless network. More particularly, the present invention provides a technique for passively monitoring the nodes of an IEEE 802.11 wireless multi-channel network so as to determine whether they are saturated.

**Background of the Invention**

An IEEE802.11 wireless local area network (WLAN) is a contention-based network wherein all the network nodes that share a common channel must compete with each other in order to win transmission opportunities. As a result of the contention-based nature of channel access, the capacity experienced by a node is not fixed. Consequently, it is not possible to always ensure that a node has sufficient capacity to satisfy its load requirements. In other words, under certain network load conditions a node may not be able to access enough channel bandwidth for transmitting its traffic load. This leads to a condition known as saturation, wherein the node cannot win a sufficient number of transmission opportunities for transmitting its data packets. Node saturation can have a detrimental impact on the performance of a network, because it can lead the nodes into congestion and correspondingly to an unacceptable increase in packet delay and loss, resulting in a poor performance for most applications.

In an infrastructure network, it is the access point (AP) that is most vulnerable to saturation, due to the asymmetric nature of the traffic flow, since all nodes, APs and clients will experience the same contention for access. However, as the AP needs to access the medium more often, it experiences the shortage of access opportunities more severely than the clients.

Node saturation can also be a significant problem in WLAN mesh networks wherein mesh nodes are required to forward packets received from adjacent nodes. Owing to certain routing decisions, a particular node or set of nodes may at times have a large number of transmission paths directed towards them, whereby such nodes become network bottlenecks and vulnerable to saturation. The issue is compounded in ad-hoc networks, as existing routes may be interrupted due to node mobility and topology changes, with the result that redirected traffic may create new bottleneck nodes. Accordingly, it is important to detect saturation promptly and accurately, for effecting timely network channel changes and removing the conditions conducive of saturation and congestion.

Three main techniques are known for detecting the presence of saturated nodes on a network. A first technique is for the saturated node to inform neighbouring nodes in the network, that it has become saturated. The node can detect whether it is saturated or not by monitoring its transmission buffer and determining whether it is full or overflowing. Although the measurement of saturation is accurate, the communication of this measurement to neighbour nodes is unreliable, because the saturated node may not be able to announce its saturated condition to its neighbours.

The second technique is to regularly ping all the network nodes with probe packets for determining whether they are operating normally. Measuring the end-to-end loss or delay by sending probe packets is widely used in detecting the saturated node. However, this technique can also experience a lack of reliable communication with saturated nodes and it does not scale well. The communication of probe packets also consumes network channel bandwidth, which can have a negative impact on network performance due to the increased contention on the medium.

A document entitled "PAC: Perceptive Admission Control for Mobile Wireless Networks", Quality of service in heterogeneous wired/wireless networks, 2004, QSH INE 2004. First international conference on Dallas, TX, USA, 18-20 Oct, 2004, Piscataway, NJ, USA, 18 October 2004, pages 18 to 26 describes a perceptive admission control protocol for wireless networks.

A new technique is required for determining saturation at nodes of a wireless network, which should preferably mitigate the disadvantages associated with the above two techniques.

**Summary of the Invention**

The present invention provides a distributed method and system, wherein each network node passively monitors the performance of adjacent or "neighbouring" nodes in order to detect if saturation is occurring. Each node uses a different network channel and experiences differing network medium conditions relative to adjacent nodes which it monitors, whereby an error margin will be associated with this technique relative to the first, more accurate technique previously described. However, and advantageously, this technique has no bandwidth overhead because it is passive and does not require a reliable communication path with all adjacent nodes, whether saturated or not. From the perspective of wireless applications, this passive monitor by adjacent neighbour nodes directly is much more convenient.

According to an aspect of the present invention, there is therefore provided, as set out in the appended claims, a method of remotely determining saturation at each node of a wireless network, wherein the wireless network comprises a plurality H of communication channels over which a plurality N of nodes communicate data, comprising the steps of capturing packets transmitted by adjacent remote nodes within reception range for a predetermined time interval T interval; calculating a Capacity Utilization (%CU) of each adjacent node from the captured packets, being the ratio of a network bandwidth used by a node for transmitting its data load and a network bandwidth available under the load conditions ; comparing each adjacent node %CU against a predetermined threshold parameter for determining a saturated condition; and communicating data representative of the saturated condition determination to one or more of the adjacent nodes.

In an embodiment of the method according to the invention, the predetermined threshold parameter is preferably a value representative of node saturation probability.

In an embodiment of the method according to the invention, the step of calculating may further comprise calculating traffic load, measuring contention and calculating MAC bandwidth components of each adjacent node. In a variant of this embodiment, the step of calculating traffic load further

comprises assuming that a mean load of nodes from which packets cannot be captured is equal to the mean load of the nodes from which packets are captured. In a variant of this further embodiment, the step of measuring contention further comprises assuming that all frames from nodes from which packets cannot be captured are transmitted with a uniform time interval within the predetermined time interval $T_{interval}$. With a consideration the failed transmitted frames due to collisions, assuming that most collisions involve just two nodes.

In an embodiment of the method according to the invention, the method preferably comprises the further step of extending the predetermined time interval $T_{interval}$ for improving accuracy of %CU.

In an embodiment of the method according to the invention, the method preferably comprises the further step of reducing the predetermined time interval $T_{interval}$ for accelerating the detection of saturation.

In an embodiment of the method according to the invention, the method preferably comprises the further step of communicating data representative of the saturation determination to one or more of the adjacent nodes in beacon frames. In a variant of this embodiment, the beacon frames may contain a Capacity Utilization Information Element.

According to another aspect of the present invention, there is also provided a system comprising a wireless network with a plurality *H* of communication channels and a plurality *N* of nodes connected to the network, wherein each node is adapted to capture packets transmitted by adjacent remote nodes within reception range for a predetermined time interval $T_{interval}$; calculate a Capacity Utilization (%CU) of each adjacent node from the captured packets, being the ratio of a network bandwidth used by a node for transmitting its data load and a network bandwidth available under the load conditions ; compare each adjacent node %CU against a predetermined threshold parameter for determining a saturated condition; and communicate data representative of the saturated condition determination to one or more of the adjacent nodes.

In an embodiment of the system according to the invention, the predetermined threshold parameter is again preferably a value representative of node saturation probability.

In an embodiment of the system according to the invention, each node is again adapted to calculate traffic load, measure contention and calculate MAC bandwidth components of each adjacent node, for calculating its %CU.

In a variant of this embodiment, each node is further adapted to assume that a mean load of nodes from which packets cannot be captured is equal to the mean load of the nodes from which packets are captured, for calculating the traffic load. In a variant of this further embodiment, each node is further adapted to assume that all frames from nodes from which packets cannot be captured are transmitted with a uniform time interval within the predetermined time interval $T_{interval}$, for measuring contention. Moreover, each node is adapted to assume that most collisions involve just two nodes to halve the fail transmission bandwidth.

In an embodiment of the system according to the invention, each node is further adapted to extend the predetermined time interval $T_{interval}$ for improving accuracy of %CU.

In an embodiment of the system according to the invention, each node is further adapted to reduce the predetermined time interval $T_{interval}$ for accelerating the detection of saturation.

In an embodiment of the system according to the invention, each node is further adapted to communicate data representative of the saturation determination to one or more of the adjacent nodes in beacon frames. Such beacon frames preferably contain a Capacity Utilization Information Element.

According to yet another aspect of the present invention, there is also provided a network node in a wireless network, wherein the wireless network comprises a plurality N of nodes communicating data across a plurality H of channels, comprising monitoring means adapted to capture packets transmitted by adjacent remote nodes within reception range for a predetermined time interval $T_{interval}$; calculating means adapted to calculate a Capacity Utilization (%CU) of each adjacent node from the captured packets, being the ratio of a network bandwidth used by a node for transmitting its data load and its node capacity, i.e. a network bandwidth available under the load conditions ; and comparing means adapted to compare each adjacent node %CU against a predetermined threshold parameter for determining a saturated condition; and communicating data representative of the saturated condition determination to one or more of the adjacent nodes.

According to still another aspect of the present invention, there is also provided a set of instructions recorded on a data carrying medium which, when processed by each data processing terminal of a plurality N thereof connected to a wireless network having a plurality $H$ of communication channels, configures each terminal to perform the steps of capturing packets transmitted by adjacent remote nodes within reception range for a predetermined time interval $T_{interval}$; calculating a Capacity Utilization (%CU) of each adjacent node from the captured packets, being the ratio of a network bandwidth used by a node for transmitting its data load and a network bandwidth available under the load conditions ; comparing each adjacent node %CU against a predetermined threshold parameter for determining a saturated condition; and communicating data representative of the saturated condition determination to one or more of the adjacent nodes.

For any of the above embodiments and further variants, any in the plurality N of nodes may selected from the group comprising mobile telephone handsets, tablet computers, portable computers, personal digital assistants, portable media players, portable game consoles.

Other aspects are as set out in the claims herein.

## Brief Description of the Drawings

For a better understanding of the invention and to show how the same may be carried into effect, there will now be described by way of example only, specific embodiments, methods and processes according to the present invention with reference to the accompanying drawings in which:

Figure 1 shows a network environment comprising a network router providing a wireless communication medium and six data processing terminals configured as stations or nodes A, B, C, D, E and estimated node in communication therewith.

Figure 2 is a logical representation of MAC bandwidth information when a stations access the medium in Figure 1.

Figure 3 illustrates that a collision occurs when two stations contend the network medium

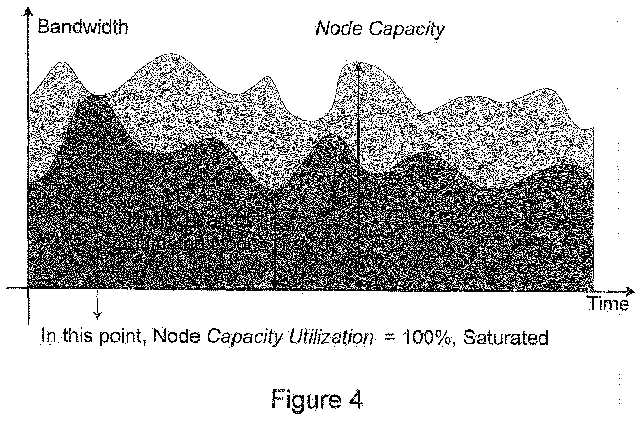

Figure 4 illustrates the relationship of Capacity Utilization, node capacity and traffic load of a WLAN node.

Figure 5 is a logical diagram of an embodiment of the method according to the invention, which may be embodied in each of the stations A, B, C, D and E of Figures 1.

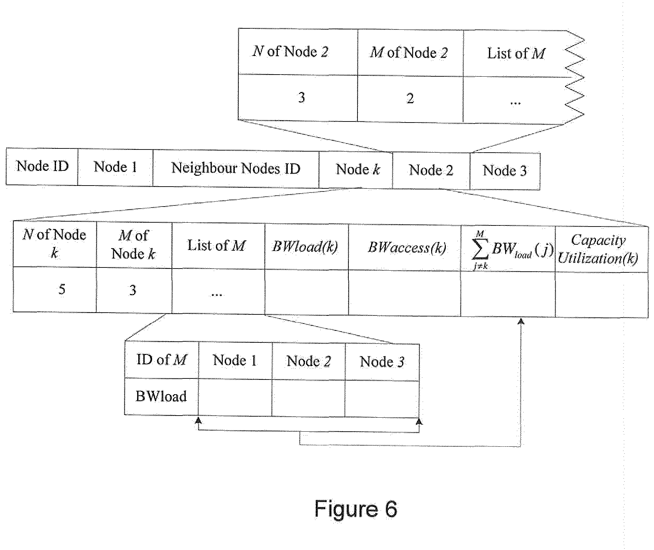

Figure 6 is a neighbours information table at remote observer node of Figure 1.

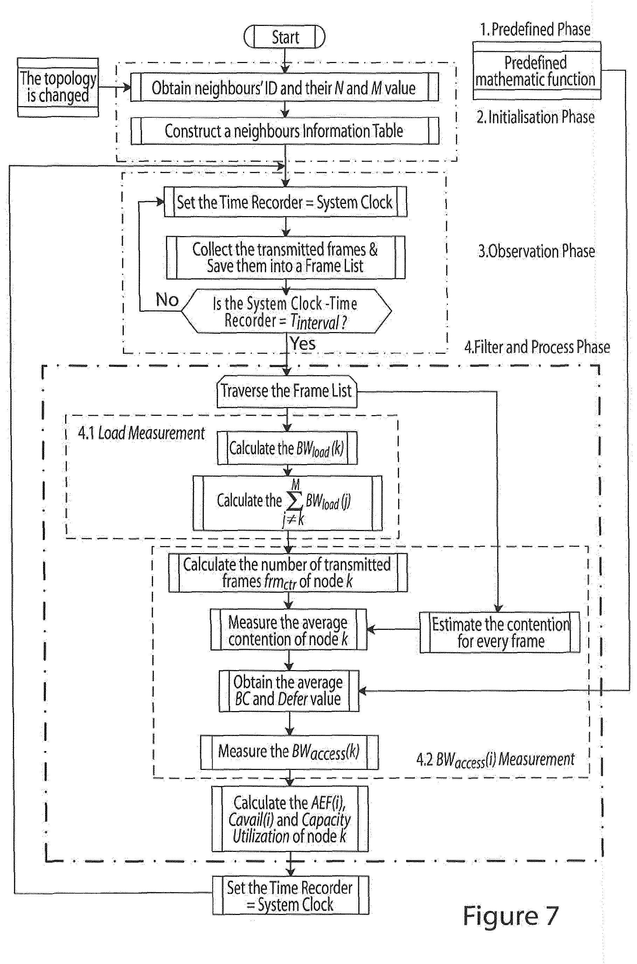

Figure 7 is a specific logical diagram of an embodiment of the method according to the invention.

Figure 8 shows the model of error associated with the Capacity Utilization estimation and the related modifications in order to minimize the error.

Figure 9 illustrates the logical diagram of an embodiment of node saturation detection according to the invention.

## Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

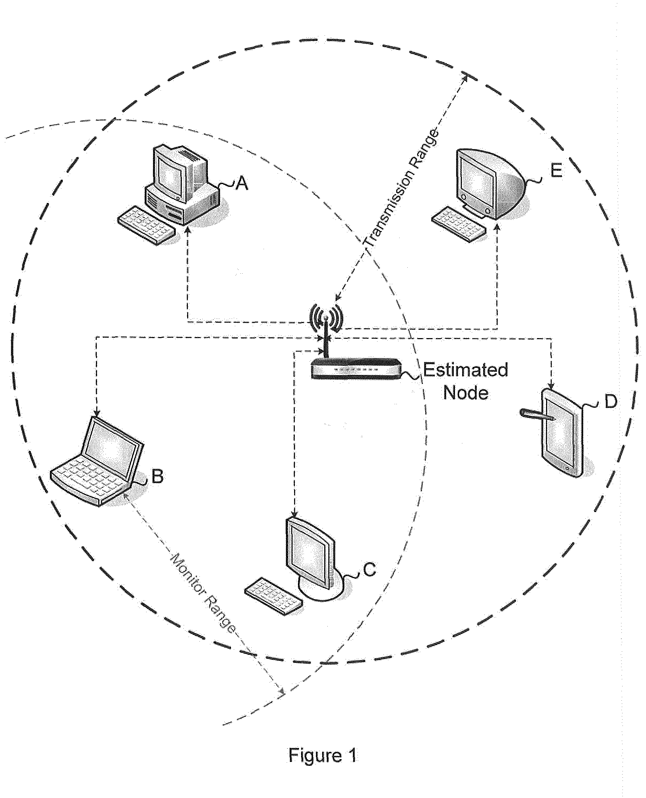

With reference to Figure 1, an example embodiment of a system according to the invention is shown within a networked environment.

The networked environment includes three data processing terminals A, B, C, D and E hereinafter interchangeably referred to as stations or nodes A, B and C, each with Wireless Local Area Network (WLAN) connectivity. Each station A, B and C has wireless telecommunication emitting and receiving functionality over a wireless local area network ('WLAN') conforming to the IEEE 802.11 standard ('Wi-Fi'). In the WLAN, telecommunication is performed as data packets encoding voice, alphanumeric, audio, video and/or image data using the Internet Protocol (IP), Voice data over IP ('VoIP') protocol, Hypertext Transfer Protocol ('HTTP') or Secure Hypertext Transfer Protocol ('HTTPS'), the signal being relayed respectively to or from each station A, B, C, D and E by a wireless router. A typical station A, B, C, D or E for use with the system according to the invention may be any one of a desktop computer, laptop computer, a 'smartphone' and, generally, any sedentary or portable data processing device having at least data processing means, storage means and wireless networking means.

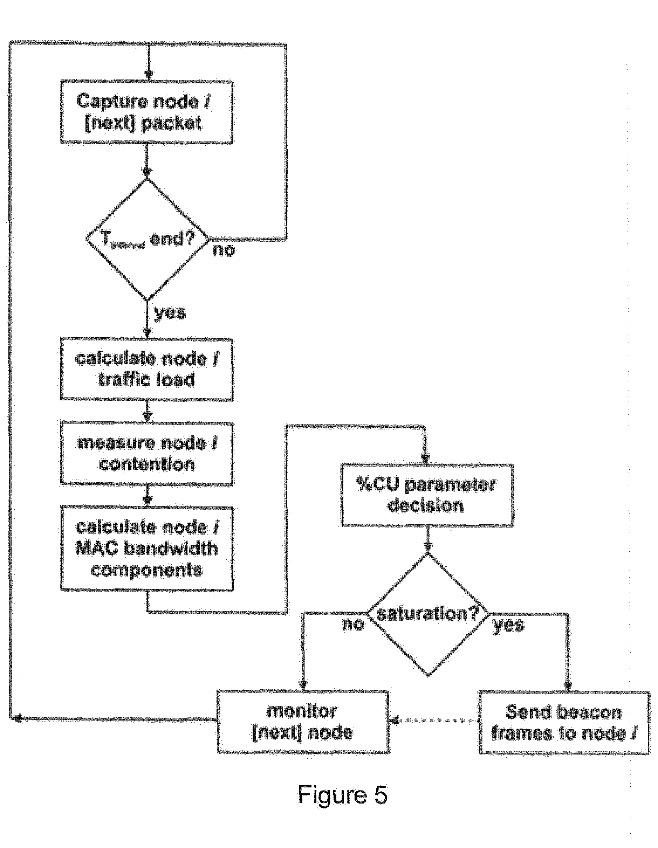

An embodiment of a passive saturation detection technique according to the invention is described hereafter with reference to Figure 5, suitable for implementation in the environment of Figure 1. This new technique is based upon each node of the network passively and remotely observing adjacent nodes. In the example therefore, each of stations A, B, C, D and E performs the technique, whereby station A monitors each of stations B and C, station B monitors each of stations A and C, and node or station C monitors each of stations A and B, to determine whether they are saturated.

The method implements a temporal analysis framework which models the way in which the IEEE 802.11 MAC mechanism wins transmission opportunities at each station. The critical performance metric produced by the model is the *Capacity Utilization (%CU)* of a node A, B, C and which is defined as the ratio of the bandwidth utilized by a node in transmitting its load and the bandwidth available under the current load conditions. It constitutes a measure of how close to saturation is a node operating, e.g. whether the node *%CU* is equal to 100%, which means that the current load is consuming all of the available capacity and cannot win any more transmission opportunities, thus that the node is saturated, or less than 100%.

There are four main phases involved in the embodiment of the saturation detection method shown in Figure 5: an initial observation phase, an intermediate filtering and processing phase, and a final saturation decision phase.

Before the observation phase, a C++ program to simulate and model the DCF mechanism, deferral and backoff procedure, re-transmission scheme, and the binary exponential back-off contention window in order to simulate the contention for access under saturation conditions and generate the fitted curves as a function of average contention.

During the observation phase, each station A, B and C captures packet transmissions from adjacent stations within its network signalling reception range. The station captures the frames that contend for access to the medium and processes the packet transmissions in a specified time interval ($T_{interval}$). Increasing $T_{interval}$ for observing the transmissions of adjacent stations leads to higher accuracy in detecting saturation; however, and correspondingly, it also leads to an increased detection time and decision delay, which may become unacceptable as it can lead to a higher probability of buffer overflow occurrences. Conversely, reducing $T_{interval}$ for observing the transmissions of adjacent stations correspondingly decreases accuracy in detecting saturation, yet results in a faster saturation detection. It will be readily understood by the skilled reader that $T_{interval}$ is a variable, the optimum value of which should be selected according to conditions and factors prevalent in the network environment, such as environmental conditions, both the number N and geographical or topological distribution of stations, signalling noise, besides many other. The value may therefore be user-selected or -adjustable or, preferably still, automatically selected and/or adjustable. In a simple example, automatic selection of the specified time interval ($T_{interval}$) may for instance depend upon the number of adjacent stations detected at the onset of an observation phase.

Each station A, B and C subsequently filters and processes the captured frames during the filtering and processing phase, for estimating the *%CU* value of its adjacent stations. Accordingly, each station A, B, C performs a series of operations which includes calculating the traffic load of adjacent stations, measuring their contention and calculating their MAC bandwidth components.

An example of operation for estimating the *%CU* value is described hereafter by way of non-limitative example. The node capacity is the bandwidth available under the current load conditions and represents the maximum load that can be achieved by the node provided that the other network nodes maintains their current load.

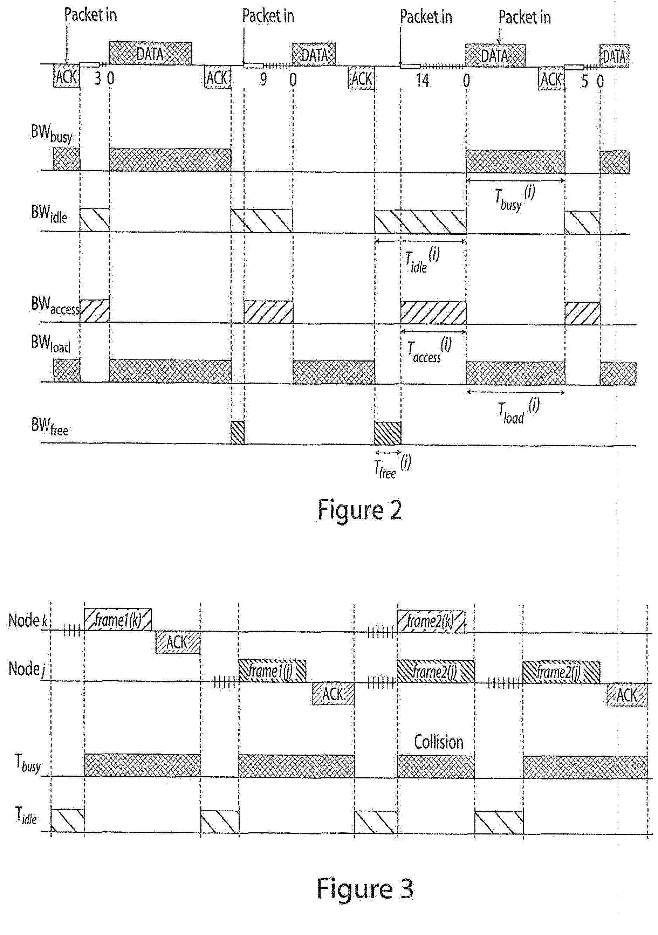

If a channel has only one station, the relationship between the four MAC bandwidth components is shown as Figure 2:

$$BW_{busy} + BW_{idle} = 1 \qquad\qquad (1)$$

$$BW_{busy} = BW_{load}(k) \qquad\qquad (2)$$

$$BW_{access}(k) + BW_{free}(k) = BW_{idle} = 1 - BW_{busy} \qquad (3)$$

If a channel has two stations, the relationship between the four MAC bandwidth components is:

$$BW_{busy} = \sum_k BW_{load}(k) + BW_{collision} \qquad\qquad (4)$$

$BW_{load}$ represents the successfully transmitted frames, while $BW_{collision}$ represents the unsuccessfully transmitted frames. In the case where two or more nodes are contending for access, some bandwidth will be inevitably lost because of collisions between the nodes attempting to access the medium at the same time as shown in Figure 3. All frames, irrespective of whether they were successful or not, contribute to $BW_{busy}$.

For a network with multiple stations, the relationship between the MAC bandwidth components is more complex. The reason is that the time used to gain access the medium is shared between the contending stations.

The average access time has two components: the average time spent deferring (e.g. waiting for an interval of DIFS to elapse) and the average time spent backing off (e.g. decrementing the backoff counter to zero).

$$\bar{T}_{access} = \bar{T}_{defer} + \bar{T}_{backoff} \qquad (5)$$

It is assumed that $BW_{collision}$ is negligible, the capacity of node $k$ can be derived as follows:

$$C_{avail}(k) = AEF(k) \times \left[1 - \sum_{j \neq k}^{N} BW_{load}(k)\right] \qquad (6)$$

The Capacity Utilization (%CU) which is defined as the ratio of the bandwidth utilized by a node in transmitting its load and node capacity. For a node k, its Capacity Utilization can be derived as:

$$\%CU(k) = \frac{BW_{load}(k)}{C_{avail}(k)} \times 100\% \qquad (7)$$

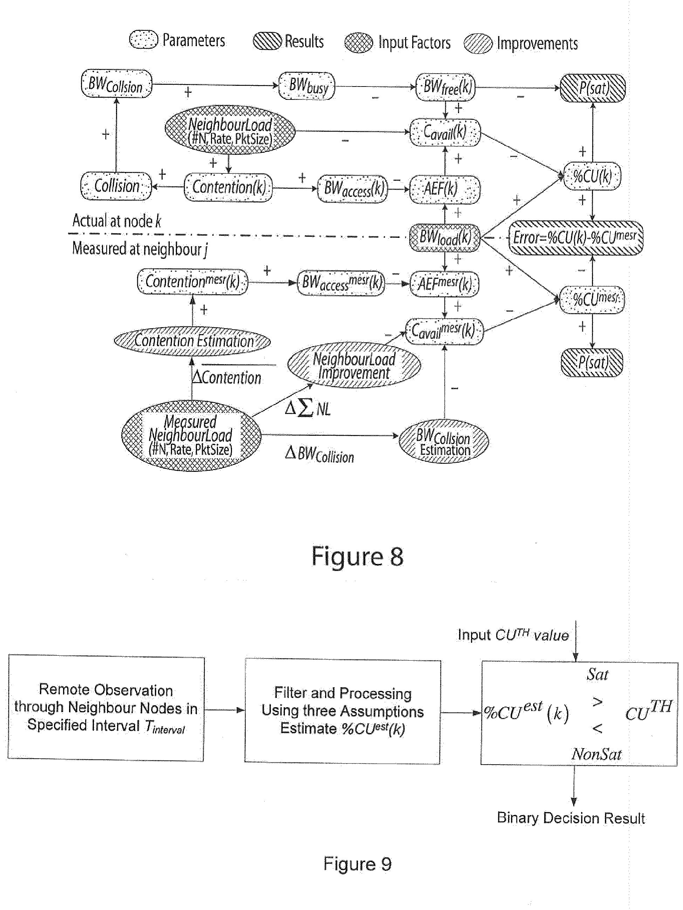

Each station A, B, C, D and E subsequently performs a Bayesian decision process based upon a %CU threshold parameter during the final decision making phase as Figure 9, in order to output a decision about node saturation for the monitored stations. The threshold parameter can be optimized by selecting an appropriate value for the saturation probability of the station through a minimum error-rate classifier based upon Bayesian decision theory. The optimal $CU^{TH}$ corresponds to the probability of node saturation in the network, i.e. the higher probability of node saturation, the lower optimal %CU threshold can be chosen. After the decision, the observing station (e.g. A) can encode the saturation decision information in beacon frames and communicate the beacon frames to its adjacent stations (e.g. B, C), so that they may take preventive actions to avoid further deterioration of data communications.

It will be readily understood by the skilled reader that the remote and passive measuring of one or more adjacent node's %CU value, will include an error inherent to the differences in the wireless medium as observed by the different stations. For example, errors may arise due to the estimated station having one or more adjacent stations (e.g. station D and E) which cannot be observed by the station (e.g. station B) performing the measurement as shown in Figure 1. As the observer station and the observed stations do not experience the same medium, the estimation of %CU value performed by the observer station will differ from that experienced by the observed station itself.

The greater the difference in the state of the medium, for example due to the unobservable adjacent stations of the observed station, the larger the error involved in the estimation of %CU. The main sources of error in the estimation of %CU are the error in the calculation of the adjacent station load and the error in the calculation of the contention experienced by the observed adjacent stations. As a consequence of using a passive remote observation technique to detect node saturation in neighbour stations, errors associated with %CU value estimation are unavoidable but they may be minimized through one or both of three assumptions, resulting in a more accurate determination of saturation occurrences.

The model of error associated with the remote Capacity Utilization (%CU) estimator as shown in Figure 9 analysis the factors that influence the accuracy of the estimator.

The first assumption is that the mean load of the unobservable adjacent stations is equal to the mean load of the observable adjacent stations. This assumption has been shown to reduce the error associated with the estimation of %CU for the majority of test cases considered by the inventors.

For an estimated node $k$ has $N$ neighbours and the neighbour node can monitor $M$ neighbours of node $k$. For the neighbour node, the total neighbour load of node k that can be observed is $\sum_{j \neq k}^{Obsr} BW_{load}(j)$. Then using *Assumption One* to estimate the neighbour load $\sum_{j \neq k}^{Est} BW_{load}(j)$ is:

$$\sum_{j \neq k}^{Est} BW_{load}(j) = \sum_{j \neq k}^{Obsr} BW_{load}(j) + \sum_{j \neq k}^{Obsr} BW_{load}(j) \times \frac{N-M}{M} \qquad (8)$$

The second assumption is that the contention calculation of the observed adjacent station, as measured by the monitoring station, can be corrected by assuming that all the frames from the unobservable adjacent stations of the observed station are transmitted with a uniform time interval within the measurement interval of interest. This assumption is related to the first assumption, that the observed station and its adjacent stations share the same medium. The number of unobserved frames $frm_{ctr}^{Unobsr}$ is sent from the neighbour nodes of the observed node by the number of frames can be monitored $frm_{ctr}^{Obsr}$. The formula can be written as:

$$frm_{ctr}^{Unobsr} = frm_{ctr}^{Obsr} \times \frac{N-M}{M} \qquad (9)$$

Once a collision occurs at the receiver node, the node cannot observe this failed transmitted frame. However, the node can detect the failed transmission through the next successfully transmitted frame where the re-transmission flag. If simply summing all the failed bandwidth of neighbour nodes of observed node, some bandwidth $BW_{collision}$ will be double counted or even multiple counted because of collisions between the nodes attempting to access the medium at the same time.

In order to avoid double counting of the failed bandwidth, halving the load bandwidth of failed transmissions under the assumption that most collisions involve just two nodes.

$$\sum_{j \neq k}^{Est} BW_{load}(j)^{mesr} = \sum_{j \neq k}^{Est} BW_{load}(j)^{succ} + \frac{1}{2} \sum_{j \neq k}^{Est} BW_{load}(j)^{fail} \qquad (10)$$

The present invention thus provides a technique for passively estimating the %CU of a wireless network node or station with minimal overhead and no bandwidth consumption, and which can serve as generic solution for detecting node saturation. The technique supports packet routing decisions, also known to the skilled person as resource-aware routing, channel selection in multi-radio/multi-channel networks, radio resource management for bandwidth provisioning for VoIP and video streaming services, and admission control.

The advantages provided by the technique are multiple, and varied. Bandwidth provision for real-time services can be optimised at least computational and bandwidth requirements. The technique allows for the remote and passive detection of saturation in network nodes, which removes the need for inter-node communications, save as to communicating data representative of a saturation condition in a proactive embodiment. The technique allows for admission control, and scales efficiently in view of its peer-to-peer approach, particularly when implemented with assumptions about unobservable stations. The technique is apt to identify the network conditions corresponding to a DDoS (Distributed Denial of Service) attack occurring on a wireless network.

Accordingly, use of the technique is expected to be comparably varied, for example by operators deploying large-scale and dense wireless networks; operators tasked with providing specified QoS (Quality of Service) levels and a corresponding real-time network performance monitoring mechanism for same across large-scale networks; operators with a requirement to improve visibility of network operations, performance and bottlenecks; and operators of wireless network hot spots.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

**Claims**

1. A method of remotely determining saturation at each node of a wireless network, wherein the wireless network comprises a plurality $H$ of communication channels over which a plurality $N$ of nodes communicate data, comprising the steps of
   capturing packets transmitted by adjacent remote nodes within reception range for a predetermined time interval $T_{interval}$;
   calculating a Capacity Utilization ,%CU, of each adjacent node from the captured packets, being the ratio of a network bandwidth used by a node for transmitting its data load and a maximum load that can be achieved by the node provided that the other network nodes maintain their current load;
   comparing each adjacent node %CU against a predetermined threshold parameter for determining a saturated condition; and
   communicating data representative of the saturated condition determination to one or more of the adjacent nodes.

2. The method according to claim 1, wherein the predetermined threshold parameter is a value representative of node saturation probability.

3. The method according to claim 1 or 2, wherein the step of calculating further comprises calculating traffic load, measuring contention and calculating MAC bandwidth components of each adjacent node.

4. The method according to claim 3, wherein the step of calculating traffic load further comprises assuming that a mean load of nodes from which packets cannot be captured is equal to the mean load of the nodes from which packets are captured.

5. The method according to claim 4, wherein the step of measuring contention further comprises assuming that all frames from nodes from which packets cannot be captured are transmitted with a uniform time interval within the predetermined time interval $T_{interval}$.

6. The method according to any of claims 1 to 5, comprising the further step of extending the predetermined time interval $T_{interval}$ for improving accuracy of %CU.

7. The method according to any of claims 1 to 6, comprising the further step of reducing the predetermined time interval $T_{interval}$ for accelerating the detection of saturation.

8. The method according to any of claims 1 to 7, comprising the further step of communicating data representative of the saturation determination to one or more of the adjacent nodes in beacon frames.

9. The method according to claim 8, wherein the beacon frames contain a Capacity Utilization Information Element , CUIE.

10. A system comprising a wireless network with a plurality $H$ of communication channels and a plurality $N$ of nodes connected to the network, wherein each node is adapted to
    capture packets transmitted by adjacent remote nodes within reception range for a predetermined time interval $T_{interval}$;
    calculate a Capacity Utilization ,%CU, of each adjacent node from the captured packets, being the ratio of a network bandwidth used by a node for transmitting its data load and a maximum load that can be achieved by the node provided that the other network nodes maintain their current load;
    compare each adjacent node %CU against a predetermined threshold parameter for determining a saturated condition; and
    communicate data representative of the saturated condition determination to one or more of the adjacent nodes.

11. The system according to claim 10, wherein the predetermined threshold parameter is a value representative of node saturation probability.

12. The system according to claim 11, wherein each node is adapted to calculate traffic load, measure contention and calculate MAC bandwidth components of each adjacent node, for calculating its %CU.

13. The system according to claim 12, wherein each node is further adapted to assume that a mean load of nodes from which packets cannot be captured is equal to the mean load of the nodes from which packets are captured, for calculating the traffic load.

14. A network node in a wireless network, wherein the wireless network comprises a plurality $N$ of nodes communicating data across a plurality $H$ of channels, comprising :

   monitoring means adapted to capture packets transmitted by adjacent remote nodes within reception range for a predetermined time interval $T_{interval}$;
   calculating means adapted to calculate a Capacity Utilization ,%CU, of each adjacent node from the captured packets, being the ratio of a network bandwidth used by a node for transmitting its data load and a maximum load that can be achieved by the node provided that the other network nodes maintain their current load;
   comparing means adapted to compare each adjacent node %CU against a predetermined threshold parameter for determining a saturated condition; and communicating means adapted to communicate data representative of the saturated condition determination to one or more of the adjacent nodes.

15. A set of instructions recorded on a data carrying medium which, when processed by each data processing terminal of a plurality $N$ thereof connected to a wireless network having a plurality $H$ of communication channels, configures each terminal to perform the steps of :

   capturing packets transmitted by adjacent remote nodes within reception range for a predetermined time interval $T_{interval}$;
   calculating a Capacity Utilization ,%CU, of each adjacent node from the captured packets, being the ratio of a network bandwidth used by a node for transmitting its data load and a maximum load that can be achieved by the node provided that the other network nodes maintain their current load ;
   comparing each adjacent node %CU against a predetermined threshold parameter for determining a saturated condition; and
   communicating data representative of the saturated condition determination to one or more of the adjacent nodes.

## Patentansprüche

1. Verfahren zur Fernbestimmung der Sättigung an jedem Knoten eines drahtlosen Netzwerks, wobei das drahtlose Netzwerk eine Vielzahl $H$ von Kommunikationskanälen umfasst, über die eine Vielzahl $N$ von Knoten Daten übermittelt, wobei das Verfahren folgende Schritte umfasst:

   Erfassen von Paketen, die von benachbarten entfernten Knoten innerhalb des Empfangsbereichs für ein vor-bestimmtes Zeitintervall $T_{interval}$ gesendet werden;
   Berechnen einer Kapazitätsauslastung, %CU, jedes benachbarten Knotens aus den erfassten Paketen, die das Verhältnis einer Netzwerkbandbreite ist, die von einem Knoten zum Übertragen seiner Datenladung verwendet wird, und einer maximalen Last, die von dem Knoten erreicht werden kann, vorausgesetzt, dass die anderen Netzwerkknoten ihre aktuelle Last beibehalten;
   Vergleichen jedes benachbarten Knotens %CU mit einem vorbestimmten Schwellenwertparameter zum Bestimmen einer gesättigten Bedingung; und
   Übermitteln von Daten, die für die Bestimmung der Sättigungsbedingung repräsentativ sind, an einen oder mehrere der benachbarten Knoten.

2. Verfahren nach Anspruch 1, wobei der vorbestimmte Schwellenwertparameter ein Wert ist, der die Knotensättigungswahrscheinlichkeit repräsentiert.

3. Verfahren nach Anspruch 1 oder 2, wobei der Berechnungsschritt ferner das Berechnen der Datenverkehrslast, das Messen der Konkurrenz und das Berechnen der MAC-Bandbreitenkomponenten jedes benachbarten Knotens umfasst.

4. Verfahren nach Anspruch 3, wobei der Schritt des Berechnens der Datenverkehrslast ferner umfasst, dass angenommen wird, dass eine mittlere Last von Knoten, von denen Pakete nicht erfasst werden können, gleich der mittleren Last der Knoten ist, von denen Pakete erfasst werden.

5. Verfahren nach Anspruch 4, wobei der Schritt des Messens der Konkurrenz ferner umfasst, dass angenommen wird, dass alle Rahmen von Knoten, von denen Pakete nicht erfasst werden können, mit einem gleichförmigen Zeitintervall innerhalb des vorbestimmten Zeitintervalls $T_{interval}$ übertragen werden.

6. Verfahren nach einem der Ansprüche 1 bis 5, das den weiteren Schritt des Erweiterns des vorbestimmten Zeitintervalls $T_{interval}$ zum Verbessern der Genauigkeit von %CU umfasst.

7. Verfahren nach einem der Ansprüche 1 bis 6, das den weiteren Schritt des Verringerns des vorbestimmten Zeitintervalls $T_{interval}$ zum Beschleunigen der Erfassung der Sättigung umfasst.

8. Verfahren nach einem der Ansprüche 1 bis 7, das den weiteren Schritt des Kommunizierens von Daten, die für die Sättigungsbestimmung repräsentativ sind, zu einem oder mehreren der benachbarten Knoten in Beacon-Frames umfasst.

9. Verfahren nach Anspruch 8, wobei die Beacon-Frames ein Kapazitätsauslastungsinformationselement (Capacity Utilization Information Element, CUIE) enthalten.

10. System, das ein drahtloses Netzwerk mit einer Vielzahl H von Kommunikationskanälen und einer Vielzahl N von Knoten, die mit dem Netzwerk verbunden sind, umfasst, wobei jeder Knoten für Folgendes ausgelegt ist:

   Erfassen von Paketen, die von benachbarten entfernten Knoten innerhalb des Empfangsbereichs für ein vorbestimmtes Zeitintervall $T_{interval}$ gesendet werden;
   Berechnen einer Kapazitätsauslastung, %CU, jedes benachbarten Knotens aus den erfassten Paketen, die das Verhältnis einer Netzwerkbandbreite ist, die von einem Knoten zum Übertragen seiner Datenladung verwendet wird, und einer maximalen Last, die von dem Knoten erreicht werden kann, vorausgesetzt, dass die anderen Netzwerkknoten ihre aktuelle Last beibehalten;
   Vergleichen jedes benachbarten Knotens %CU mit einem vorbestimmten Schwellenwertparameter zum Bestimmen einer gesättigten Bedingung; und
   Übermitteln von Daten, die für die Bestimmung der Sättigungsbedingung repräsentativ sind, an einen oder mehrere der benachbarten Knoten.

11. System nach Anspruch 10, wobei der vorbestimmte Schwellenwertparameter ein Wert ist, der die Knotensättigungswahrscheinlichkeit repräsentiert.

12. System nach Anspruch 11, wobei jeder Knoten dafür ausgelegt ist, die Datenverkehrslast zu berechnen, die Konkurrenz zu messen und die MAC-Bandbreitenkomponenten jedes benachbarten Knotens zu berechnen, um seinen %CU-Wert zu berechnen.

13. System nach Anspruch 12, wobei jeder Knoten ferner dafür ausgelegt ist, anzunehmen, dass eine mittlere Last von Knoten, von denen Pakete nicht erfasst werden können, gleich der mittleren Last der Knoten ist, von denen Pakete erfasst werden, um die Datenverkehrslast zu berechnen.

14. Netzwerkknoten in einem drahtlosen Netzwerk, wobei das drahtlose Netzwerk eine Vielzahl *N* von Knoten umfasst, die Daten über eine Vielzahl *H* von Kanälen kommunizieren, wobei der Netzwerkknoten Folgendes umfasst:

   ein Überwachungsmittel, das dafür ausgelegt ist, Pakete zu erfassen, die von benachbarten entfernten Knoten innerhalb des Empfangsbereichs für ein vorbestimmtes Zeitintervall $T_{interval}$ gesendet werden;
   ein Berechnungsmittel, das dafür ausgelegt ist, eine Kapazitätsauslastung, %CU, jedes benachbarten Knotens aus den erfassten Paketen, die das Verhältnis einer Netzwerkbandbreite ist, die von einem Knoten zum Übertragen seiner Datenladung verwendet wird, und einer maximalen Last, die von dem Knoten erreicht werden kann, vorausgesetzt, dass die anderen Netzwerkknoten ihre aktuelle Last beibehalten, zu berechnen;
   ein Vergleichsmittel, das dafür ausgelegt ist, jeden benachbarten Knoten %CU mit einem vorbestimmten Schwellenparameter zum Bestimmen einer gesättigten Bedingung zu vergleichen; und
   ein Kommunikationsmittel, das dafür ausgelegt ist, Daten, die für die Bestimmung der Sättigungsbedingung repräsentativ sind, an einen oder mehrere der benachbarten Knoten zu übermitteln.

**15.** Satz von Anweisungen, der auf einem datentragenden Medium aufgezeichnet ist, der, wenn er von jedem Datenverarbeitungsendgerät einer Vielzahl N davon verarbeitet wird, die mit einem drahtlosen Netzwerk verbunden sind, das eine Vielzahl H von Kommunikationskanälen aufweist, jedes Endgerät dafür konfiguriert, die folgenden Schritte durchzuführen:

Erfassen von Paketen, die von benachbarten entfernten Knoten innerhalb des Empfangsbereichs für ein vorbestimmtes Zeitintervall $T_{interval}$ gesendet werden;
Berechnen einer Kapazitätsauslastung, %CU, jedes benachbarten Knotens aus den erfassten Paketen, die das Verhältnis einer Netzwerkbandbreite ist, die von einem Knoten zum Übertragen seiner Datenladung verwendet wird, und einer maximalen Last, die von dem Knoten erreicht werden kann, vorausgesetzt, dass die anderen Netzwerkknoten ihre aktuelle Last beibehalten;
Vergleichen jedes benachbarten Knotens %CU mit einem vorbestimmten Schwellenparameter zum Bestimmen einer gesättigten Bedingung und
Übermitteln von Daten, die für die Bestimmung der Sättigungsbedingung repräsentativ sind, an einen oder mehrere der benachbarten Knoten.

## Revendications

**1.** Un procédé de détermination à distance d'une saturation au niveau de chaque noeud d'un réseau sans fil, où le réseau sans fil comprend une pluralité $H$ de canaux de communication par l'intermédiaire desquels une pluralité $N$ de noeuds communiquent des données, comprenant les opérations suivantes :

la capture de paquets transmis par des noeuds distants adjacents à l'intérieur d'une plage de réception pendant un intervalle de temps prédéterminé $T_{interval}$,
le calcul d'une utilisation de capacité, %CU, de chaque noeud adjacent à partir des paquets capturés, qui est le rapport d'une bande passante de réseau utilisée par un noeud pour la transmission de sa charge de données et d'une charge maximale qui peut être atteinte par le noeud sous réserve que les autres noeuds de réseau maintiennent leur charge courante,
la comparaison de chaque %CU de noeud adjacent à un paramètre seuil prédéterminé destiné à la détermination d'une condition saturée, et
la communication de données représentatives de la détermination de condition saturée à un ou plusieurs des noeuds adjacents.

**2.** Le procédé selon la Revendication 1, où le paramètre seuil prédéterminé est une valeur représentative d'une probabilité de saturation de noeud.

**3.** Le procédé selon la Revendication 1 ou 2, où l'opération de calcul comprend en outre le calcul d'une charge de trafic, la mesure d'un conflit et le calcul de composants de bande passante MAC de chaque noeud adjacent.

**4.** Le procédé selon la Revendication 3, où l'opération de calcul d'une charge de trafic comprend en outre l'hypothèse qu'une charge moyenne de noeuds à partir desquels des paquets ne peuvent pas être capturés est égale à la charge moyenne des noeuds à partir desquels des paquets sont capturés.

**5.** Le procédé selon la Revendication 4, où l'opération de mesure d'un conflit comprend en outre l'hypothèse que la totalité des trames provenant de noeuds à partir desquels des paquets ne peuvent pas être capturés sont transmises avec un intervalle de temps uniforme à l'intérieur de l'intervalle de temps prédéterminé $T_{interval}$.

**6.** Le procédé selon l'une quelconque des Revendications 1 à 5, comprenant l'opération complémentaire d'extension de l'intervalle de temps prédéterminé $T_{interval}$ de façon à améliorer la précision de la %CU.

**7.** Le procédé selon l'une quelconque des Revendications 1 à 6, comprenant l'opération complémentaire de réduction de l'intervalle de temps prédéterminé $T_{interval}$ de façon à accélérer la détection d'une saturation.

**8.** Le procédé selon l'une quelconque des Revendications 1 à 7, comprenant l'opération complémentaire de communication de données représentatives de la détermination de saturation à un ou plusieurs des noeuds adjacents dans des trames de balise.

9. Le procédé selon la Revendication 8, où les trames de balise contiennent un élément d'information d'utilisation de capacité, CUIE.

10. Un système comprenant un réseau sans fil avec une pluralité $H$ de canaux de communication et une pluralité $N$ de noeuds raccordés au réseau, où chaque noeud est adapté de façon à

capturer des paquets transmis par des noeuds distants adjacents à l'intérieur d'une plage de réception pendant un intervalle de temps prédéterminé $T_{interval}$,

calculer une utilisation de capacité, %CU, de chaque noeud adjacent à partir des paquets capturés, qui est le rapport d'une bande passante de réseau utilisée par un noeud pour la transmission de sa charge de données et d'une charge maximale qui peut être atteinte par le noeud sous réserve que les autres noeuds de réseau maintiennent leur charge courante,

comparer chaque %CU de noeud adjacent à un paramètre seuil prédéterminé destiné à la détermination d'une condition saturée, et

communiquer des données représentatives de la détermination de condition saturée à un ou plusieurs des noeuds adjacents.

11. Le système selon la Revendication 10, où le paramètre seuil prédéterminé est une valeur représentative d'une probabilité de saturation de noeud.

12. Le système selon la Revendication 11, où chaque noeud est adapté de façon à calculer une charge de trafic, à mesurer un conflit et à calculer des composants de bande passante MAC de chaque noeud adjacent, de façon à calculer son %CU.

13. Le système selon la Revendication 12, où chaque noeud est adapté en outre de façon à faire l'hypothèse qu'une charge moyenne de noeuds à partir desquels des paquets ne peuvent pas être capturés est égale à la charge moyenne des noeuds à partir desquels des paquets sont capturés, de façon à calculer la charge de trafic.

14. Un noeud de réseau dans un réseau sans fil, où le réseau sans fil comprend une pluralité $N$ de noeuds communiquant des données par l'intermédiaire d'une pluralité $H$ de canaux, comprenant :

un moyen de surveillance adapté de façon à capturer des paquets transmis par des noeuds distants adjacents à l'intérieur d'une plage de réception pendant un intervalle de temps prédéterminé $T_{interval}$,

un moyen de calcul adapté de façon à calculer une utilisation de capacité, %CU, de chaque noeud adjacent à partir des paquets capturés, qui est le rapport d'une bande passante de réseau utilisée par un noeud pour la transmission de sa charge de données et d'une charge maximale qui peut être atteinte par le noeud sous réserve que les autres noeuds de réseau maintiennent leur charge courante,

un moyen de comparaison adapté de façon à comparer la %CU de chaque noeud adjacent à un paramètre seuil prédéterminé destiné à la détermination d'une condition saturée, et

un moyen de communication adapté de façon à communiquer des données représentatives de la détermination de condition saturée à un ou plusieurs des noeuds adjacents.

15. Un ensemble d'instructions enregistrées sur un support de données qui, lorsqu'elles sont traitées par chaque terminal de traitement de données d'une pluralité $N$ de ceux-ci raccordés à un réseau sans fil possédant une pluralité $H$ de canaux de communication, configurent chaque terminal de façon à exécuter les opérations suivantes :

la capture de paquets transmis par des noeuds distants adjacents à l'intérieur d'une plage de réception pendant un intervalle de temps prédéterminé $T_{interval}$,

le calcul d'une utilisation de capacité, %CU, de chaque noeud adjacent à partir des paquets capturés, qui est le rapport d'une bande passante de réseau utilisée par un noeud destiné à la transmission de son charge de données et d'une charge maximale qui peut être atteinte par le noeud sous réserve que les autres noeuds de réseau maintiennent leur charge courante,

la comparaison de chaque %CU de noeud adjacent à un paramètre seuil prédéterminé destiné à la détermination d'une condition saturée, et

la communication de données représentatives de la détermination de condition saturée à un ou plusieurs des noeuds adjacents.

Figure 1

Figure 2

Figure 3

Bandwidth

Node Capacity

Traffic Load of Estimated Node

Time

In this point, Node *Capacity Utilization* = 100%, Saturated

Figure 4

Figure 5

| *N* of Node *2* | *M* of Node *2* | List of *M* |
|---|---|---|
| 3 | 2 | ... |

| Node ID | Node 1 | Neighbour Nodes ID | Node *k* | Node 2 | Node 3 |
|---|---|---|---|---|---|

| *N* of Node *k* | *M* of Node *k* | List of *M* | *BWload(k)* | *BWaccess(k)* | $\sum\limits_{j \neq k}^{M} BW_{load}(j)$ | *Capacity Utilization(k)* |
|---|---|---|---|---|---|---|
| 5 | 3 | ... | | | | |

| ID of *M* | Node 1 | Node 2 | Node 3 |
|---|---|---|---|
| BWload | | | |

# Figure 6

Figure 7

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- PAC: Perceptive Admission Control for Mobile Wireless Networks. *Quality of service in heterogeneous wired/wireless networks, 2004, QSH INE 2004. First international conference on Dallas,* 18 October 2004, 18-26